# FASCICULE DE BREVET EUROPEEN

(11) **EP 2 857 795 B1**
(45) Date de publication et mention de la délivrance du brevet: **27.11.2019**
(21) Numéro de dépôt: 14003194.9
(22) Date de dépôt: 16.09.2014
(51) Int. Cl.: G01C 9/28, E04F 21/00

(54) **Procédé, dispositif autonome d'aide a la mise en oeuvre, pose, fixation et ajustement de l'orientation de profilés tubulaires et utilisation**
Verfahren, autonome Hilfsvorrichtung zur Umsetzung, zum Einbau, zur Befestigung und Ausrichtung von Rohrprofilen, und Anwendung
Method and standalone device for assisting with the implementation, installation, attachment and adjustment of the orientation of tubular profile members and use

(30) Priorité: 30.09.2013 FR 1302275
(43) Date de publication de la demande: 08.04.2015
(73) Titulaire: Mantion SAS, 25000 Besançon (FR)
(72) Inventeur: Benoit, Dominique, 25660 Saône (FR)
(74) Mandataire: Munier, Laurent

(56) Documents cités:
- AU-A4- 2012 101 397
- GB-A- 2 463 259
- US-A- 1 229 916

## Description

### DOMAINE TECHNIQUE DE L'INVENTION :

La présente invention concerne l'aide à la mise en œuvre, pose, fixation et ajustement de l'orientation de profilés tubulaires.

Plus précisément l'invention se rapporte au secteur de la construction et plus particulièrement la mise en oeuvre de profilés tubulaires lesquels servent soit d'armatures, soit de cadres et typiquement des structures de roulement telles que, dans des applications domestiques et tertiaires, des rails de suspension pour des panneaux avec pour exemple des vantaux de portes coulissantes, des panneaux de volets roulants coulissants et dans le cas d'application industrielle des rails suspendus de transport ou de déplacement de charge.

### ART ANTERIEUR :

Les règles de l'art exigent une mise en œuvre correcte de tels supports de roulement, à savoir ici dans le cadre de cette invention un respect strict de l'orientation horizontale ou verticale voire inclinée des profilés constituant les supports de roulement ici appelés rails.

A cet effet l'art actuel préconise l'utilisation de niveaux à bulle et ou à rapporteur d'angle pour des poses obliques. Ces niveaux font partie des outillages manuels pour le positionnement et la fixation des profilés tubulaires. Ces niveaux peuvent être magnétiques et permettent l'économie d'une aide manuelle tierce facilitant ainsi la pose de profilés tubulaires. La technologie a également évolué vers des outils numériques à laser utiles et pratiques et apportant des avantages similaires aux niveaux magnétiques.

Dans des cas d'applications standardisées de rails autonomes ou faisant partie de structures de cadres, l'art actuel met des gabarits de pose à disposition qui comportent des dispositifs de contrôle des niveaux.

Ces outils constituent des aides à une mise en œuvre de profilés tubulaires. Ils sont à l'usage du poseur et parfois de son assistant.

Un dispositif d'aide à la mise en œuvre, pose et à l'ajustement de l'orientation de profilés tubulaires pourvus de retours de paroi, ledit dispositif d'aide à la mise en œuvre, pose, fixation et ajustement de l'orientation de profilés étant un ensemble monobloc nomade, autonome et amovible, à corps creux ou plein, élastique, découle du document GB 2 463 259 A dit D3.

Il découle de l'enseignement de ce document que ledit dispositif en combinaison comporte :
- des moyens de préhension du dispositif d'aide à la pose et à l'ajustement de l'orientation de profilés tubulaires,
- des moyens de maintien (6) d'un ou plusieurs dispositifs de niveau à bulle et ou de mesure.

Ainsi, ce document dit D3 décrit (voir en particulier les figures de la description), un ensemble pour l'alignement de tuiles ou de carrelage, comprenant au moins deux parties mobiles l'une par rapport à l'autre.

Le déplacement relatif entre ces deux parties se fait suivant un moyen guide 17 à savoir une rainure en queue d'aronde. Ce dispositif comprend également des éléments de jonction qui peuvent être des bandes adhésives. La partie qui court dans cette rainure est un dispositif de mesure adapté à mesurer l'orientation ou la longueur et qui peut pivoter autour d'un axe afin de déclencher une alarme quand l'angle recherché est atteint. Il est prévu de fixer un laser sur ce dispositif.

### LIMITATIONS DE L'ART ANTERIEUR :

L'outillage manuel oblige le poseur de profilés tubulaires à l'usage de rails à procéder à de multiples poses et déposes des outils du genre précité lors des opérations de mise en œuvre des dits profilés pour permettre le déplacement correct de panneaux coulissants ou équivalents. Ces opérations concernent pour le moins la fixation et l'ajustement des orientations verticale, horizontale ou oblique. Cela représente une perte de temps et d'efficacité pour un poseur et partant cela a un coût.

Les quelques améliorations apportées à ces outils ne rendent pas leur emploi universel. Pour exemple les outils magnétiques qui ne sont utiles que pour des profilés ferreux mais sont inopérants pour les inox et composites.
L'outillage numérique à laser est encombrant et coûteux. Le gain de temps n'est pas si évident quand il s'agit de la préparation de ces outils à chaque mise en œuvre de profilé. Un outillage manuel se remplace facilement et peut être à disposition du poseur en plusieurs exemplaires tandis que pour un outillage numérique à laser il est très rare de disposer d'un de rechange en cas de défaillance.

Certaines mises en œuvre ne peuvent pas se passer de l'assistance d'une tierce personne en charge de conserver l'orientation avec l'outil sélectionné pendant que le poseur procède à la fixation ou à l'ajustement des niveaux requis.

Quant aux gabarits de pose, leur emploi est dédié à un produit ou à une gamme de produit et ce d'un fabricant. Il ne peut être universel. Les gabarits qui tentent de l'être sont de mise en œuvre délicate et leur référence sont rarement pérennes. Le temps gagné est souvent repris par la nécessité de réinitialiser ce type de gabarit.

L'ensemble enseigné par le document D3 (GB 2 463 259 A), par contraste à l'invention :
- ne sert pas à la pose incluant l'ajustement et l'orientation de profilés tubulaires ; puisqu'il est prévu pour la pose de carrelage ;
- n'est pas non plus un ensemble monobloc car constitué de plusieurs parties coulissantes l'une par rapport à l'autre ;
- ne présente pas les moyens qui permettent de le fixer par pression due à l'élasticité (absence de corps creux ou plein mais élastique de l'invention) aux profilés tubulaires qui doivent être posés.

### OBJET DE L'INVENTION :

Dans le but d'éviter tous ces problèmes nés des limitations de l'art antérieur avec l'avantage de rendre de tels outils fermement solidaires de profilés tubulaires sans être tributaires de la nature des matériaux du profilé et des gammes de dimensions usuelles pour tout type d'applications. En maintenant toutefois ces outils amovibles et réutilisables. Leur réalisation ne sera pas d'un coût en temps, complications et argent plus élevé que l'outillage classique connu. Sa conception confère un usage quasi universel du fait de ses caractéristiques modulables dimensionnellement à savoir des caractéristiques de conception qui permettent une fabrication dédiée à une ou des catégories de profilés tubulaires.

L'invention a pour but de réaliser un tel objectif en reprenant les avantages de l'art antérieur et en les exprimant avec une réalisation simple qui conçoit simultanément une bonne prise en main, une fixation précise et ferme dans et sur le profilé creux, un positionnement confortable sans perte de référence des dispositifs de niveau à bulle et ou de mesure des orientations horizontales, verticales voire obliques.

En premier lieu, l'invention concerne un dispositif autonome d'aide à la mise en œuvre, pose, fixation et ajustement de l'orientation de profilés tubulaires tel que défini par la revendication 1.

L'invention concerne de plus un procédé de fabrication d'un tel dispositif tel que défini par la revendication 8, et un procédé de mise en oeuvre d'un tel dispositif tel que défini par la revendication 10.

Selon l'invention, ledit procédé de fabrication d'un tel dispositif se fait par l'assemblage des sous-ensembles suivants :
- des moyens de préhension du dispositif d'aide à la pose et à l'ajustement de l'orientation de profilés tubulaires,
- des moyens de maintien d'un ou plusieurs dispositifs de niveau à bulle et ou de mesure,
- des moyens élastiques de mise en référence, de centrage et de maintien du dispositif d'aide à la pose et à l'ajustement de l'orientation de profilés tubulaires dans et sur le profilé, sur et dans le profilé sont associés en combinaison deux à deux symétriquement opposés sur la paroi externe de l'ensemble monobloc, comportant :
   - solidaires de chacun des côtés de l'enveloppe des dispositifs de niveau à bulle et ou de mesure, deux ailes de maintien du corps monobloc dans et sur le profilé, de direction opposée au et inclinée dans le sens et vers les retours de paroi du profilé tubulaire ;
   - et des moyens élastiques d'introduction du dispositif d'aide à la pose et à l'ajustement de l'orientation de profilés tubulaires dans la chambre du profilé tubulaire,
   - et des moyens élastiques d'introduction du dispositif d'aide dans la chambre du profilé tubulaire formant un coin ou biseau tronqué à son extrémité qui réunit deux plans inclinés de forme concave dont les parties sommitales sont sensiblement parallèles pour faciliter l'introduction entre les chants des retours de paroi du profilé tubulaire, suivies de parties inclinées concaves pour guider l'introduction du corps monobloc dans la chambre du profilé tubulaire et accumuler une énergie élastique suffisante pour le maintien du corps monobloc dans et sur le profilé tubulaire après que les chants des retours de paroi aient dépassé les parties terminales des plans inclinés qui jouxtent les deux plans d'appui de référence.

Le choix du matériau constituant un tel dispositif monobloc est un polymère ayant la capacité d'être comprimé voire déformé accumulant ainsi suffisamment d'énergie élastique pour permettre de reprendre indéfiniment sa forme et références d'origine mais surtout de pouvoir rendre opérationnel l'ensemble des moyens techniques de la solution précitée.

Quant aux références d'origine, sont concernés les plans d'appui du dispositif sur le profilé tubulaire avec les indexations de références horizontale et ou verticale et ou de valeurs d'angles en degré ou grade des dispositifs de niveau à bulle et ou de mesure.

Les moyens de préhension seront réalisés de sorte qu'il soit rendu possible de manipuler le dispositif avec deux doigts. L'invention envisage deux modes de réalisation possibles et confortables, soit avec une lame de préhension soit avec un espace de préhension réalisé dans le corps monobloc du dispositif.

Les moyens permettant d'intégrer ou de noyer les dispositifs sont conçus pour prendre le moins de place possible sous forme d'enveloppe tout en laissant libre tout type de lecture visuelle de façon confortable et ce dans toutes les directions opérationnelles que le poseur rencontre lors de la mise en œuvre d'un profilé tubulaire à l'usage de rail. Ce sont des ouvertures ou des fenêtres de lecture avec des angles de visualisation multiples pour une lecture pluridirectionnelle.

Les moyens de mise en référence du dispositif de l'invention sur le profilé tubulaire sont conçus en tenant compte de trois caractéristiques intrinsèques qui simultanément solutionnent, en mettant à profit l'élasticité du corps monobloc du dispositif, le maintien du dispositif une fois positionné sur le profilé tubulaire avec deux ailes opposées dirigées dans le sens contraire d'introduction. Le centrage du dispositif est conçu avec deux plans concaves sur lesquels se déplaceront les chants des retours des parois du profilé tubulaire jusqu'à ce que ce déplacement soit stoppé par des butées de positionnement. Ces dernières sont conçues comme des plans d'appui de référence. Ces deux plans de référence comme les autres caractéristiques citées sont situées de part et d'autre du corps monobloc du dispositif. Les plans d'appui sont dirigés à contresens des ailes. Ce face à face des deux moyens assurent la fixation du dispositif et garantissent le maintien du centrage. Les deux plans de référence sont des éléments de la référence d'origine du dispositif précédemment décrite.

Les moyens d'introduction sont conçus comme un coin ou biseau en conformant la partie du corps monobloc du dispositif, celle introduite dans le creux du profilé tubulaire, comme un coin ou biseau. Un biseau qui comporte à son extrémité libre une tête tronquée bordée de deux rampes concaves qui permettent de ne pas gêner l'introduction du dispositif et réaliser progressivement une accumulation de l'énergie élastique entre les chants des retours des parois du profilé tubulaire. Cette énergie est maximum à l'arrivée sur la base des rampes sur une course relativement courte. En effet les chants des retours des parois du profilé tubulaire vont déboucher sur les deux plans concaves de centrage déclenchant la libération de cette accumulation d'énergie laquelle permettra la mise en appui des retours des parois du profilé tubulaire sur les plans d'appui du dispositif.

### AVANTAGES et APPLICATION :

L'invention se rapporte encore à un procédé de mise en œuvre du dispositif conforme à celui décrit ci-dessus par utilisation d'au moins un des modes de réalisation d'un dispositif autonome d'aide à la mise en œuvre, pose et à l'ajustement de l'orientation de profilés tubulaires ledit dispositif est tubulaires afin de s'affranchir de l'inconfort d'un outillage indépendant, voire de s'affranchir du besoin d'une assistance lors de la mise en œuvre de profilés formant cadre ou guide ou rail de multiples applications dans le domaine de la construction monobloc, autonome et amovible, de corps creux ou plein, dans une matière composite sensiblement élastique et à mémoire de forme, la préhension se faisant à l'aide, la mise en référence, le centrage et le maintien se faisant par l'utilisation des moyens de maintien d'un ou plusieurs dispositifs de niveau à bulle et ou de mesure, des moyens élastiques de mise en référence, de centrage et de maintien et des moyens élastiques d'introduction du dispositif d'aide à la pose et à l'ajustement de l'orientation de profilés tubulaires dans la chambre d'un profilé tubulaire, le tout garantissant la pérennité et la conservation de l'étalonnage initial de référence des moyens de niveau à bulle et ou de mesure avec la structure dudit ensemble monobloc.

Les avantages qui découlent de cette conception sont le confort d'utilisation et la simplicité de mise en œuvre du dispositif. Son encombrement et son coût réduit permettent de disposer de plusieurs dispositifs lors de mises en œuvre de profilés tubulaires. Sa manipulation est des plus aisée. Le dispositif s'applique à tout type de profilés tubulaire, car il peut de par la nature du matériau se décliner de façon standard pour toutes dimensions des gammes de profilés considérés et présentes sur le marché. Il est réutilisable indéfiniment et peut être placé seul ou avec d'autres sans inconvénients à tout endroit de la longueur d'un profilé du fait de son faible encombrement. C'est une conception pour une application rendue universelle pour des profilés tubulaires creux réduits à quelques grandes catégories dimensionnelles pour des poseurs ; partant universelle pour un fabricant lorsque ce dernier n'use que d'une catégorie dimensionnelle du marché.

Le dispositif peut en outre être doté de moyens de lecture de niveau à bulle ou à rapport d'angle, connu permettant tout usage et partant toute application. Sa conception et son matériau en font un outil inaltérable dans son utilisation normale.

Le gain de temps est manifeste et partant la rentabilité donc la qualité de mise en œuvre de profilés tubulaires.

Le dispositif est donc apte pour être utilisé dans le secteur de la construction et plus particulièrement pour la mise en œuvre de profilés tubulaires seuls ou faisant partie de cadres d'ouvrages de la construction tels que cadres dormants pour ouvrants coulissants ou du genre. Tous les secteurs de la construction sont concernés par l'application de l'invention ; secteur domestique, tertiaire et industriel. En effet pour exemple dans le secteur industriel utilise souvent pour l'approvisionnement, la fabrication ou la mise en stock et la sortie de stock des chemins de roulement suspendus avec des rails, réalisés avec des profilés tubulaires.

Les solutions, leur but et fonctionnement et autres avantages apparaîtront dans la description technique qui suit.

Le dispositif est de surcroit personnalisable avec un logo, une marque ou autre signe distinctif et ou caractérisant identitaire ou technique.

L'invention sera mieux comprise à la lecture de deux exemples non limitatifs de mise en œuvre de la présente invention qui va maintenant être décrite au regard des figures annexées :

### FIGURES :

- La Fig. 1 : Vue schématique d'ensemble d'un dispositif monté selon un premier mode de réalisation.

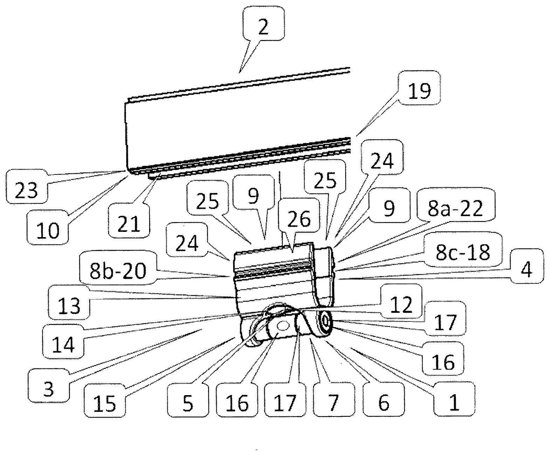

- La Fig. 2 : Vue du dispositif selon un premier mode de réalisation en cours d'introduction dans un profilé tubulaire.

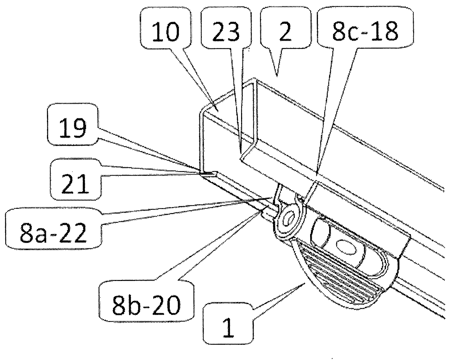

- La Fig. 3 : Vue du dispositif selon un premier mode de réalisation positionné, centré et fixé dans et sur un profilé tubulaire.
- La Fig. 4 : Vue du dispositif selon un second mode de réalisation en cours d'introduction dans un profilé tubulaire.

### DESCRIPTION DES FIGURES :

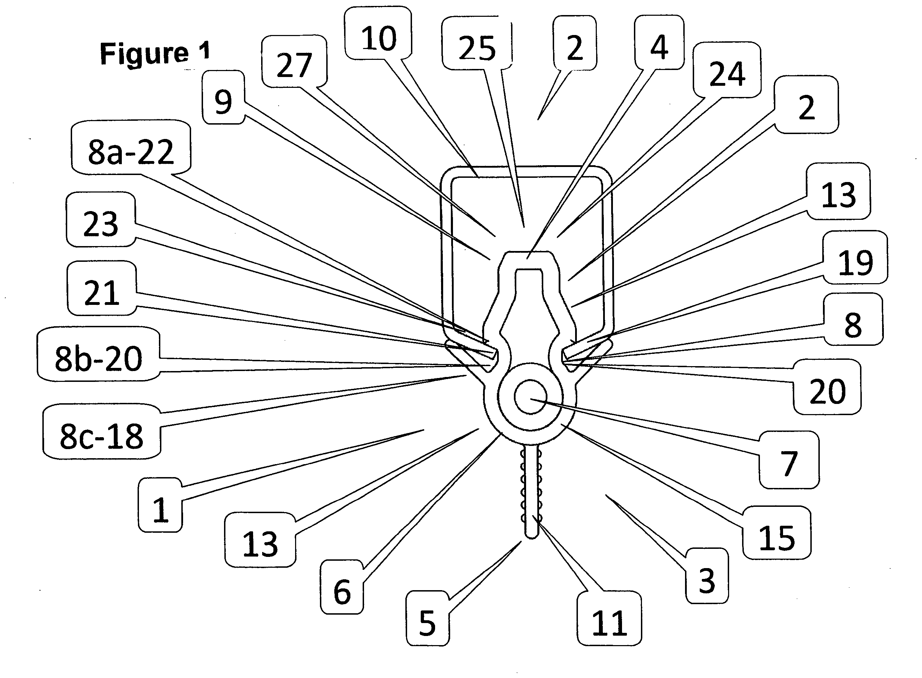

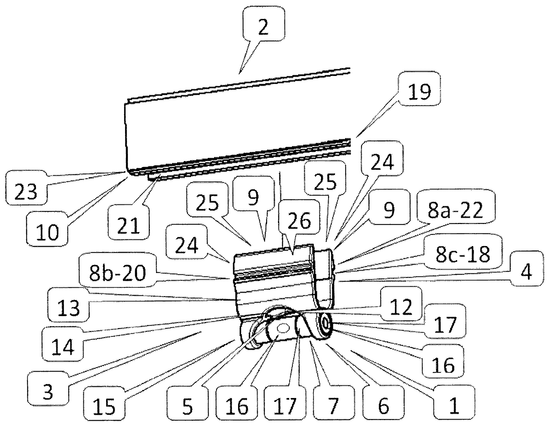

Les Fig.1 et Fig.4 représentent deux modes de réalisation de l'invention qui concernent la solution recherchée en concevant un dispositif autonome 1 d'aide à la mise en œuvre, pose, fixation et ajustement de l'orientation de profilés tubulaires 2.L'invention n'est pas limitée à ces deux modes de réalisation.

Le dispositif d'aide 1 à la mise en œuvre, pose, fixation et ajustement de l'orientation de profilés tubulaires 2 est un ensemble monobloc 3 autonome et amovible pour plus de confort dans son utilisation dans diverses applications dans lesquelles des profilés tubulaires 2 sont destinées à servir de chemin de roulement ou de rails.

Le dispositif autonome 1 a été conçu à corps creux grâce aux caractéristiques du matériau utilisé pour sa réalisation. Une matière de synthèse ou composite aux propriétés connues qui allie solidité, endurance et flexibilité. Elle est compressible et sensiblement élastique ce qui permet de mettre à profit cette énergie pour rendre opérant les moyens mis en œuvre et pour garantir un fonctionnement constant et pérenne du dispositif autonome 1. L'ensemble monobloc 3 peut toutefois être réalisé en corps plein sans modifier sa fonctionnalité et ses performances.

Le dispositif autonome 1 monobloc 3, pour tout mode de réalisation, comporte en combinaison des moyens de préhension 5a, 5b, des moyens de maintien 6 d'un ou plusieurs dispositifs de niveau à bulle et ou de mesure 7 tels qu' un niveau à bulle et ou rapporteur d'angles, des moyens élastiques 8 de mise en référence 8a, de centrage 8b et de maintien 8c du dispositif autonome 1 sur et dans et sur le profilé tubulaire 2 et des moyens élastiques d'introduction 9 du dispositif d'aide 1 dans la chambre 10 du profilé tubulaire 2.

L'ensemble des moyens 5, 6, 8, 9 précités de l'ensemble monobloc 3 à corps creux 4 ou plein est réalisé avec une matière à pouvoir élastique et à mémoire de forme permettant la conservation de l'étalonnage initial de référence des moyens de niveau à bulles et ou de mesure 7 avec la structure dudit ensemble monobloc 3. L'étalonnage initial de référence d'origine indexe les plans d'appui 22 du dispositif 1 sur le profilé tubulaire 2 avec les indexations de référence horizontale et ou verticale et ou de valeurs d'angles en degré ou grade des dispositifs de niveau à bulle et ou de mesure 7. Cette matière à pouvoir élastique et à mémoire de forme permet également aux moyens techniques 5, 6, 8, 9 de l'invention de fonctionner et d'être opérationnels avec des références pérennes.

Le dispositif autonome 1 a conçu des moyens de préhension 5a, 5b de l'ensemble monobloc 3 sont selon deux modes de réalisation.
Selon la Fig.l, le moyen de préhension 5a, 5b est une lame de préhension 11 solidaire des moyens de maintien 6 d'un ou plusieurs dispositifs de niveau à bulle 7 et ou de mesure de l'ensemble monobloc 3, laquelle lame 11 comporte des conformations 12 en relief et en creux pour une préhension sure et certaine lors de la mise en place du dispositif 1. L'invention est mise en œuvre avec deux doigts qui pincent la lame 11 sans risque de voir échapper le dispositif 1 glisser des doigts.

Selon la Fig.4, le moyen de préhension 5a, 5b est constitué d'un évidement 12 situé entre les moyens de maintien 6 d'un ou plusieurs dispositifs de niveau à bulle et ou de mesure 7 et les parois latérales 13 du dispositif d'aide 1 à la pose et à l'ajustement de l'orientation de profilés tubulaires 2. La préhension est rendue sure et certaine par pincement avec deux doigts sur au moins un dispositif de niveau à bulle et ou de mesure 7. Le pincement est guidé, positionné par les bords 14 de l'évidement 12 et maintenu par les extrémités des doigts logées dans l'évidement 12.

Le dispositif autonome 1 d'aide à la mise en œuvre, pose et à l'ajustement de l'orientation de profilés tubulaires 2, pour tout mode de réalisation, comporte des moyens de maintien 6 d'un ou plusieurs dispositifs de niveau à bulle et ou de mesure 7. Ces moyens de maintien 6 de l'ensemble monobloc 3 sont conformés totalement ou partiellement en enveloppe 15 solidaire de toutes ou parties des conformations du ou des dispositifs de niveau à bulle et ou de mesure 7. Cette solidarisation permet de garantir le référencement sur et certain des dispositifs de niveau à bulle et ou de mesure 7 l'ensemble monobloc 3 car sensiblement noyé dans la masse dudit ensemble monobloc 3.

Le dispositif autonome 1 d'aide à la mise en œuvre, pose et à l'ajustement de l'orientation de profilés tubulaires 2, pour tout mode de réalisation, conçoit ces moyens de maintien 6 d'un ou plusieurs dispositifs de niveau à bulle et ou de mesure 7 avec des moyens de lecture 17 des index du ou des dispositifs de niveau à bulle et ou de mesure 7. Plus particulièrement le dispositif d'aide 1 conçoit l'enveloppe 15 solidaire des conformations du ou des dispositifs de niveau à bulle et ou de mesure 7, avec des évidements 16 qui constituent des fenêtres de lecture 17 avec des angles de visualisation pluridirectionnels, aménagées au droit des index des dispositifs de niveau à bulle et ou de mesure 7. Le confort d'utilisation est évident car il n'est plus nécessaire de déplacer le dispositif 1 en fonction des manipulations diverses et variées que nécessite la mise en œuvre de profilés tubulaires 2.

L'invention conçoit la dite enveloppe 15 solidaire des ailes 18 et parois 13 des moyens élastiques d'introduction 9 du dispositif autonome 1 d'aide à la mise en œuvre, pose et à l'ajustement de l'orientation de profilés tubulaires 2 dans la chambre 10 du profilé tubulaire 2. La solidarisation rend l'effet monobloc plus performant dans son utilisation. L'enveloppe 15 agit également comme une protection contre la détérioration et les chocs du ou des dispositifs de niveau à bulle et ou de mesure 7.

Les moyens 5, 6, 8, 9 précités de l'ensemble monobloc 3 sont combinés dans l'invention avec des moyens élastiques 8a, 8b, 8c de mise en référence 8a, de centrage 8b et de maintien 8c associés et solidarisés en combinaison sur la paroi externe 13 de l'ensemble monobloc 3. Ces moyens élastiques 8a, 8b, 8c de mise en référence 8a, de centrage 8b et de maintien 8c sont réalisés symétriquement au plan médian du dispositif 1 et rendus solidaires de chacun des cotés 17 de l'enveloppe 15 des dispositifs de niveau à bulle et ou de mesure 7.

Les moyens de maintien 8c constituent deux ailes de maintien 8c, 18 du corps monobloc 3 pour le maintien du dispositif 1 dans et sur le profilé 2. Ces deux ailes de maintien 8c, 18 sont opposées et inclinées dans le sens et vers les retours de paroi 19 du profilé tubulaire 2 ; retours de paroi 19 que les dites ailes 18 coiffent lorsque le dispositif d'aide 1 à la pose et à l'ajustement de l'orientation de profilés tubulaires 2 est en place sur et dans le profilé 2.

Les moyens de centrage 8b sont eux rendus solidaires et adjacents à la base de chacune des dites ailes de maintien 8c, 18. Les de centrage 8b sont solidaires de l'enveloppe 15 des dispositifs de niveau à bulle et ou de mesure 7 et dirigés vers les chants des retours de paroi 19 du profilé tubulaire 2. Les dits moyens de centrage 8b comportent un plan de centrage 20 de courbure concave de courbure continue ou de courbure obtenue par des successions de plans parallèles successifs. Cette conception permet l'auto positionnement du chant 21 des retours de paroi 19. En effet la contrainte élastique exercée par le matériau du corps monobloc 3 sur les plans d'appui de référence 22 des moyens élastiques 8 de centrage 8b du dispositif de niveau à bulle et ou de mesure 7 provoque le déplacement du dispositif 1 jusqu'à ce que le dispositif 1 vienne se caller sur les moyens de mise en référence 8a constituant butées de course du déplacement.

Les dits moyens de mise en référence 8a sont solidaires et en continuité des plans de centrage 20 et des moyens élastiques d'introduction 9 du dispositif d'aide 1 à la pose et à l'ajustement de l'orientation de profilés tubulaires 2 dans la chambre 10 du profilé tubulaire 2. Ces moyens de mise en référence 8a constituent deux plans d'appui de référence 22 pour les extrémités planes internes 23 des retours de paroi 19 des profilés tubulaires 2 de sorte que la mise en référence du profilé tubulaire correspondent de manière sure, certaine et suffisante à l'étalonnage de référence des moyens de niveau à bulle et ou de mesure 7 avec la structure dudit ensemble monobloc 3.

Les moyens élastiques d'introduction 9 du dispositif autonome 1 d'aide à la mise en œuvre, pose et à l'ajustement de l'orientation de profilés tubulaires 2 dans la chambre 10 du profilé tubulaire 2 forment un coin ou biseau tronqué 24 à son extrémité 25 qui réunit deux plans inclinés 26 de forme concaves dont les parties sommitales 27 sont sensiblement parallèles pour faciliter une introduction sensiblement symétrique entre les chants 21 des retours de paroi 19 du profilé tubulaire 2. Les parties sommitales 27 sont suivies en continuité de parties inclinées 26 concaves pour guider l'introduction du corps monobloc 3 et accumuler progressivement une énergie élastique suffisante au maintien du corps monobloc 3 dans et sur le profilé tubulaire 2 après que les chants 21 des retours de paroi 19 aient dépassé les parties terminales 28 des plans inclinés 26 qui jouxtent les deux plans d'appui de référence 22.

L'invention a ainsi réalisé un outil de mise en œuvre de profilé tubulaire 2 de toute nature et de tout genre compact, nomade et quasi universel.

L'invention concerne la conception, fabrication et utilisation d'au moins un des modes de réalisation d'un dispositif autonome 1 d'aide à la mise en œuvre, pose et à l'ajustement de l'orientation de profilés tubulaires 2 monobloc 3, autonome et amovible, de corps creux 4 ou plein, dans une matière composite sensiblement élastique et à mémoire de forme, comportant des moyens de préhension 5a, 11, 5b, 12, des moyens de maintien 6 d'un ou plusieurs dispositifs de niveau à bulle et ou de mesure 7, des moyens élastiques 8 de mise en référence 8a, 22, de centrage 8b, 20 et de maintien 8c, 18 et des moyens élastiques d'introduction 9 du dispositif d'aide 1 à la pose et à l'ajustement de l'orientation de profilés tubulaires 2 dans la chambre 10 d'un profilé tubulaire 2, le tout garantissant la pérennité et la conservation de l'étalonnage initial de référence des moyens de niveau à bulle et ou de mesure 7 avec la structure dudit ensemble monobloc 3 afin de s'affranchir de l'inconfort d'un outillage indépendant, voire de s'affranchir du besoin d'une assistance lors de la mise en œuvre de profilés 2 formant cadre ou guide ou rail de multiples applications dans le domaine de la construction.

Selon différentes variantes d'exécution de l'invention :
* l'ensemble monobloc 3 à corps creux 4 ou plein est réalisé avec une matière synthétique ou composite à pouvoir élastique et à mémoire de forme permettant outre la conservation de l'étalonnage initial de référence des moyens de niveau à bulle et ou de mesure 7 avec la structure dudit ensemble monobloc 3, la performance et le fonctionnement des moyens 5, 6, 8, 9 précités de l'ensemble monobloc.
* les moyens de préhension 5a, 5b de l'ensemble monobloc 3 sont selon deux modes de réalisation composés soit d'une lame de préhension 11 solidaire des moyens de maintien 6 d'un ou plusieurs dispositifs de niveau à bulle 7 et/ou de mesure de l'ensemble monobloc 3, laquelle lame 11 comporte des conformations 12 en relief et en creux pour une préhension à deux doigts sure et certaine lors de la mise en place du dispositif d'aide 1, alternativement d'un évidement 12 situé entre les moyens de maintien 6 d'un ou plusieurs dispositifs de niveau à bulle et ou de mesure 7 et les parois latérales 13 du dispositif d'aide 1, permettant ainsi la préhension sure et certaine par pincement de doigts sur au moins un dispositif de niveau à bulle et ou de mesure 7 et extrémité de doigts guidée, positionnée par les bords 14 de l'évidement 12.
* les moyens de maintien 6 d'un ou plusieurs dispositifs de niveau à bulle et ou de mesure 7 de l'ensemble monobloc 3 sont conformés totalement ou partiellement en enveloppe 15 solidaire de toutes ou parties des conformations du ou des dispositifs de niveau à bulle et ou de mesure 7.
* les moyens de maintien 6 d'un ou plusieurs dispositifs de niveau à bulle et ou de mesure 7 de l'ensemble monobloc 3 ou enveloppe 15 solidaire des conformations du ou des dispositifs de niveau à bulle et ou de mesure 7 où des évidements 16 constituent des fenêtres de lecture 17 avec des angles de visualisation multidirectionnels, aménagées au droit des index des dispositifs de niveau à bulle et ou de mesure 7.
* les moyens de maintien 6 d'un ou plusieurs dispositifs de niveau à bulle et ou de mesure 7 de l'ensemble monobloc 3 ou enveloppe 15 solidaire des conformations du ou des dispositifs de niveau à bulle et ou de mesure 7 où ladite enveloppe 15 est solidaire des ailes 18 et parois 13 des moyens élastiques d'introduction 9 du dispositif d'aide 1 à la pose et à l'ajustement de l'orientation de profilés tubulaires 2 dans la chambre 10 du profilé tubulaire 2.
   - les moyens élastiques 8a, 8b, 8c de mise en référence 8a, de centrage 8b et de maintien 8c du dispositif d'aide 1 à la pose et à l'ajustement de l'orientation de profilés tubulaires 2 sur et dans le profilé 2 sont associés en combinaison deux à deux symétriquement opposés sur la paroi externe 13 de l'ensemble monobloc 3, comportant :
      - solidaires de chacun des cotés 17 de l'enveloppe 15 des dispositifs de niveau à bulle et ou de mesure 7, deux ailes de maintien 8c, 18 du corps monobloc 3 dans et sur le profilé 2, de direction opposée au et inclinée dans le sens et vers les retours de paroi 19 du profilé tubulaire 2; retours de paroi 19 que les dites ailes 18 coiffent lorsque le dispositif d'aide 1 est en place sur et dans le profilé 2,
      - adjacents à la base de chacune des dites ailes de maintien 8c, 18, réalisés sur l'enveloppe 15 des dispositifs de niveau à bulle et ou de mesure 7, un plan de centrage 8b, 20 de courbure continue concave ou de courbure par succession de plans parallèles du plan de centrage 20, permettant ainsi l'auto positionnement et ajustement du chant 21 des retours de paroi 19 sur les plans d'appui de référence 22 du fait de la contrainte élastique libérée par le matériau du corps monobloc 3, partant des moyens élastiques 8 dont celui de centrage 8b du dispositif de niveau à bulle et ou de mesure 7,
      - solidaires en continuité des plans de centrage 8b, 20 et des moyens élastiques d'introduction 9 du dispositif d'aide 1 dans la chambre 10 du profilé tubulaire 2, deux plans d'appui de référence 8a, 22 pour les extrémités planes internes 23 des retours de paroi 19 des profilés tubulaires 2 et butées de fin de course de positionnement du dit dispositif 1 sur et dans le profilé 2,
de sorte que la mise en référence du profilé tubulaire 2 correspondent de manière sure, certaine et suffisante à l'étalonnage de référence des moyens de niveau à bulle et ou de mesure 7 avec la structure dudit ensemble monobloc 3.
* les moyens élastiques d'introduction 9 du dispositif d'aide 1 dans la chambre 10 du profilé tubulaire 2 forme un coin ou biseau tronqué 24 à son extrémité 25 qui réunit deux plans inclinés 26 de forme concaves dont les parties sommitales 27 sont sensiblement parallèles pour faciliter l'introduction entre les chants 21 des retours de paroi 19 du profilé tubulaire 2, suivies de parties inclinées 26 concaves pour guider l'introduction du corps monobloc 3 dans la chambre 10 du profilé tubulaire 2 et accumuler une énergie élastique suffisante pour le maintien du corps monobloc 3 dans et sur le profilé tubulaire 2 après que les chants 21 des retours de paroi 19 aient dépassé les parties terminales 28 des plans inclinés 26 qui jouxtent les deux plans d'appui de référence 22.

Bien que l'invention ait été décrite en liaison avec des structures particulières, elle n'y est nullement limitée et on peut y apporter de nombreuses variantes telles qu'une augmentation du nombre de niveaux à bulles, de moyens élastiques ou le remplacement de certain matériaux élastiques ou synthétiques e.

Les combinaisons des différentes réalisations représentées sur les figures ou décrites ci-dessus ne sortent pas du cadre de l'invention.

### SIGNES DE REFERENCE

- **1-**: dispositif d'aide (1)
- **2-**: profilés tubulaires (2)
- **3-**: ensemble monobloc (3)
- **4-**: corps creux monobloc (4)
- **5-**: moyens de préhension (5a, 5b)
- **6-**: moyens de maintien (6)
- **7-**: dispositifs de niveau à bulle et ou de mesure (7)
- **8-**: moyens élastiques (8)
- 8a -: moyen de mise en référence (8a),
- 8b -: moyen de centrage (8b),
- 8c -: moyen de maintien (8c)
- **9-**: moyens élastiques d'introduction (9)
- **10-**: chambre (10)
- **11-**: lame de préhension (11)
- **12-**: Evidement de préhension (12)
- **13-**: parois latérales (13)
- **14-**: bords (14)
- **15-**: enveloppe (15)
- **16-**: évidement de fenêtre (16)
- **17-**: fenêtres de lecture (17)
- **18-**: ailes de maintien (8c, 18)
- **19-**: retours de paroi (19)
- **20-**: plan de centrage (20)
- **21-**: chant (21)
- **22-**: plans d'appui de référence (22)
- **23-**: extrémités planes internes (23)
- **24-**: Coin ou biseau tronqué (24)
- **25-**: extrémité (25)
- **26-**: plans inclinés (26)
- **27-**: parties sommitales (27)

Les signes de référence insérés entre parenthèse après les caractéristiques techniques mentionnées dans les revendications ont pour seul but de faciliter la compréhension de ces dernières et n'en limitent aucunement la portée.

## Revendications

1. Dispositif (1) d'aide à la mise en œuvre, pose et à l'ajustement de l'orientation de profilés tubulaires (2) pourvus de retours de paroi ledit dispositif d'aide (1) à la mise en œuvre, pose, fixation et ajustement de l'orientation de profilés (2) étant un ensemble monobloc (3) nomade, autonome et amovible, à corps (4) creux ou plein, élastique qui en combinaison comporte :
- des moyens de préhension (5a, 5b) du dispositif d'aide (1) à la pose et à l'ajustement de l'orientation de profilés tubulaires (2),
- des moyens de maintien (6) d'un ou plusieurs dispositifs de niveau à bulle et ou de mesure (7),
**caractérisé en ce que** ledit dispositif (1) comporte :
- des moyens élastiques (8) de mise en référence (8a), de centrage (8b) et de maintien (8c) du dispositif d'aide (1) à la pose et à l'ajustement de l'orientation de profilés tubulaires (2) dans et sur le profilé (2),
- et des moyens élastiques d'introduction (9) du dispositif d'aide (1) à la pose et à l'ajustement de l'orientation de profilés tubulaires (2) entre les chants (21) des retours de paroi (19) et dans la chambre (10) du profilé tubulaire (2) ; les moyens élastiques d'introduction (9) du dispositif d'aide (1) dans la chambre (10) du profilé tubulaire (2) formant un coin ou biseau tronqué (24) à son extrémité (25) qui réunit deux plans inclinés (26) de forme concave dont les parties sommitales (27) sont sensiblement parallèles pour faciliter l'introduction entre les chants (21) des retours de paroi (19) du profilé tubulaire (2), suivies de parties inclinées (26) concaves pour guider l'introduction du corps monobloc (3) dans la chambre (10) du profilé tubulaire (2) et accumuler une énergie élastique suffisante pour le maintien du corps monobloc (3) dans et sur le profilé tubulaire (2) après que les chants (21) des retours de paroi (19) aient dépassé les parties terminales (28) des plans inclinés (26) qui jouxtent les deux plans d'appui de référence (22).

2. Selon la revendication précédente, un dispositif (1) d'aide à la mise en œuvre, pose et à l'ajustement de l'orientation de profilés tubulaires (2), se **caractérise en ce que** l'ensemble monobloc (3) à corps creux (4) ou plein est réalisé avec une matière synthétique ou composite à pouvoir élastique et à mémoire de forme permettant outre la conservation de l'étalonnage initial de référence des moyens de niveau à bulle et ou de mesure (7) avec la structure dudit ensemble monobloc (3), la performance et le fonctionnement des moyens (5), (6), (8), (9) précités de l'ensemble monobloc (3).

3. Selon la revendication 1, un dispositif (1) d'aide à la mise en œuvre, pose et à l'ajustement de l'orientation de profilés tubulaires (2), se **caractérise en ce**
**que** les moyens de préhension (5a, 5b) de l'ensemble monobloc (3) sont composés soit d'une lame de préhension (11) solidaire des moyens de maintien (6) d'un ou plusieurs dispositifs de niveau à bulle (7) et/ou de mesure de l'ensemble monobloc (3), laquelle lame (11) comporte des conformations (12) en relief et en creux pour une préhension à deux doigts sure et certaine lors de la mise en place du dispositif d'aide (1), alternativement d'un évidement (12) situé entre les moyens de maintien (6) d'un ou plusieurs dispositifs de niveau à bulle et ou de mesure (7) et les parois latérales (13) du dispositif d'aide (1), permettant ainsi la préhension sure et certaine par pincement de doigts sur au moins un dispositif de niveau à bulle et ou de mesure (7) et extrémité de doigts guidée, positionnée par les bords (14) de l'évidement (12).

4. Selon la revendication 1, un dispositif (1) d'aide à la mise en oeuvre, pose et à l'ajustement de l'orientation de profilés tubulaires (2), se **caractérise en ce que** les moyens de maintien (6) d'un ou plusieurs dispositifs de niveau à bulle et ou de mesure (7) de l'ensemble monobloc (3) sont conformés totalement ou partiellement en enveloppe (15) solidaire de toutes ou parties des conformations du ou des dispositifs de niveau à bulle et ou de mesure (7).

5. Selon la revendication 1 et 4, un dispositif (1) d'aide à la mise en œuvre, pose et à l'ajustement de l'orientation de profilés tubulaires (2), dans lequel les moyens de maintien (6) d'un ou plusieurs dispositifs de niveau à bulle et ou de mesure (7) de l'ensemble monobloc (3) ou enveloppe (15) solidaire des conformations du ou des dispositifs de niveau à bulle et ou de mesure (7) où des évidements (16) constituent des fenêtres de lecture (17) avec des angles de visualisation multidirectionnels, aménagées au droit des index des dispositifs de niveau à bulle et ou de mesure (7).

6. Selon les revendications 1 et 4 un dispositif (1) d'aide à la mise en œuvre, pose et à l'ajustement de l'orientation de profilés tubulaires (2), dans lequel les moyens de maintien (6) d'un ou plusieurs dispositifs de niveau à bulle et ou de mesure (7) de l'ensemble monobloc (3) ou enveloppe (15) solidaire des conformations du ou des dispositifs de niveau à bulle et ou de mesure (7) où ladite enveloppe (15) est solidaire des ailes (18) et parois (13) des moyens élastiques d'introduction (9) du dispositif d'aide (1) à la pose et à l'ajustement de l'orientation de profilés tubulaires (2) dans la chambre (10) du profilé tubulaire (2).

7. Selon la revendication 1, un dispositif (1) d'aide à la mise en œuvre, pose et à l'ajustement de l'orientation de profilés tubulaires (2), **caractérisé en ce que** les moyens élastiques (8a, 8b, 8c) de mise en référence (8a), de centrage (8b) et de maintien (8c) du dispositif d'aide (1) à la pose et à l'ajustement de l'orientation de profilés tubulaires (2) sur et dans le profilé (2) sont associés en combinaison deux à deux symétriquement opposés sur la paroi externe (13) de l'ensemble monobloc (3), comportant :
solidaires de chacun des côtés (17) de l'enveloppe (15) des dispositifs de niveau à bulle et ou de mesure (7), deux ailes de maintien (8c, 18) du corps monobloc (3) dans et sur le profilé (2), de direction opposée au et inclinée dans le sens et vers les retours de paroi (19) du profilé tubulaire (2); retours de paroi (19) que les dites ailes (18) coiffent lorsque le dispositif d'aide (1) est en place sur et dans le profilé (2),
- adjacents à la base de chacune des dites ailes de maintien (8c, 18), réalisés sur l'enveloppe (15) des dispositifs de niveau à bulle et ou de mesure (7), un plan de centrage (8b, 20) de courbure continue concave ou de courbure par succession de plans parallèles du plan de centrage (20), permettant ainsi l'auto positionnement et ajustement du chant (21) des retours de paroi (19) sur les plans d'appui de référence (22) du fait de la contrainte élastique libérée par le matériau du corps monobloc (3), partant des moyens élastiques (8) dont celui de centrage (8b) du dispositif de niveau à bulle et ou de mesure (7),
- solidaires en continuité des plans de centrage (8b, 20) et des moyens élastiques d'introduction (9) du dispositif d'aide (1) dans la chambre (10) du profilé tubulaire (2), deux plans d'appui de référence (8a, 22) pour les extrémités planes internes (23) des retours de paroi (19) des profilés tubulaires (2) et butées de fin de course de positionnement du dit dispositif (1) sur et dans le profilé (2),
de sorte que la mise en référence du profilé tubulaire (2) corresponde de manière sûre, certaine et suffisante à l'étalonnage de référence des moyens de niveau à bulle et ou de mesure (7) avec la structure dudit ensemble monobloc (3).

8. Procédé de fabrication d'un dispositif selon l'une des revendications précédentes par l'assemblage des sous-ensembles suivants :
- des moyens de préhension (5a, 5b) du dispositif d'aide (1) à la pose et à l'ajustement de l'orientation de profilés tubulaires (2),
- des moyens de maintien (6) d'un ou plusieurs dispositifs de niveau à bulle et ou de mesure (7),
- des moyens élastiques (8) de mise en référence (8a), de centrage (8b) et de maintien (8c) du dispositif d'aide(1) à la pose et à l'ajustement de l'orientation de profilés tubulaires (2) dans et sur le profilé (2), sur et dans le profilé (2) sont associés en combinaison deux à deux symétriquement opposés sur la paroi externe (13) de l'ensemble monobloc (3), comportant :
- solidaires de chacun des côtés (17) de l'enveloppe (15) des dispositifs de niveau à bulle et ou de mesure (7), deux ailes de maintien (8c, 18) du corps monobloc (3) dans et sur le profilé (2), de direction opposée au et inclinée dans le sens et vers les retours de paroi (19) du profilé tubulaire (2) ;
- et des moyens élastiques d'introduction (9) du dispositif d'aide (1) à la pose et à l'ajustement de l'orientation de profilés tubulaires (2) entre les chants (21) des retours de paroi (19) et dans la chambre (10) du profilé tubulaire (2),
- les moyens élastiques d'introduction (9) du dispositif d'aide (1) dans la chambre (10) du profilé tubulaire (2) formant un coin ou biseau tronqué (24) à son extrémité (25) qui réunit deux plans inclinés (26) de forme concave dont les parties sommitales (27) sont sensiblement parallèles pour faciliter l'introduction entre les chants (21) des retours de paroi (19) du profilé tubulaire (2), suivies de parties inclinées (26) concaves pour guider l'introduction du corps monobloc (3) dans la chambre (10) du profilé tubulaire (2) et accumuler une énergie élastique suffisante pour le maintien du corps monobloc (3) dans et sur le profilé tubulaire (2) après que les chants (21) des retours de paroi (19) aient dépassé les parties terminales (28) des plans inclinés (26) qui jouxtent les deux plans d'appui de référence (22).

9. Procédé de mise en œuvre d'aide à la pose et à l'ajustement de l'orientation de profilés tubulaires (2) pourvus de retours de paroi par utilisation d'au moins un dispositif (1) d'aide à la mise en œuvre, pose et à l'ajustement de l'orientation de profilés tubulaires (2) selon l'une des revendications 1 à 7 afin de s'affranchir de l'inconfort d'un outillage indépendant, voire de s'affranchir du besoin d'une assistance lors de ladite mise en œuvre, pose et à l'ajustement de profilés (2) formant cadre ou guide ou rail de multiples applications dans le domaine de la construction, ledit dispositif (1) avec les profilés tubulaires (2) formant un ensemble monobloc (3), autonome et amovible, de corps creux (4) ou plein, dans une matière composite sensiblement élastique et à mémoire de forme,
- la préhension se faisant à l'aide des moyens (5a, 11, 5b, 12),
- la mise en référence,
- le centrage et
- le maintien
se faisant par l'utilisation des moyens de maintien (6) d'un ou plusieurs dispositifs de niveau à bulle et ou de mesure (7), des moyens élastiques (8) de mise en référence (8a, 22), de centrage (8b, 20) et de maintien (8c, 18) et des moyens élastiques d'introduction (9) du dispositif d'aide (1) à la pose et à l'ajustement de l'orientation de profilés tubulaires (2) dans la chambre (10) d'un profilé tubulaire (2), le tout garantissant la pérennité et la conservation de l'étalonnage initial de référence des moyens de niveau à bulle et ou de mesure (7) avec la structure dudit ensemble monobloc (3).

## Patentansprüche

1. Hilfsvorrichtung (1) zum Verwenden, Anbringen und Ausrichten von Rohrprofilen (2), die mit Wandungselementen versehen sind, wobei die Hilfsvorrichtung (1) zum Verwenden, Anbringen, Befestigen und Ausrichten von Profilen (2) eine mobile, autonome und lösbare einstückige Anordnung (3) mit einem elastischen Hohl- oder Vollkörper (4) ist, welche in Kombination aufweist:
- Griffmittel (5a, 5b) der Hilfsvorrichtung (1) zum Anbringen und Ausrichten von Rohrprofilen (2),
- Mittel (6) zum Halten einer oder mehrerer Wasserwaagen- und/oder Messvorrichtungen (7),
**dadurch gekennzeichnet, dass** die Vorrichtung (1) aufweist:
- elastische Mittel (8) zum Referenzieren (8a), Zentrieren (8b) und Halten (8c) der Hilfsvorrichtung (1) zum Anbringen und Ausrichten von Rohrprofilen (2) in und auf dem Profil (2),
- und elastische Mittel (9) zum Einführen der Hilfsvorrichtung (1) zum Anbringen und Ausrichten von Rohrprofilen (2) zwischen die Kanten (21) der Wandungselemente (19) und in die Kammer (10) des Rohrprofils (2); wobei die elastischen Mittel (9) zum Einführen der Hilfsvorrichtung (1) in die Kammer (10) des Rohrprofils (2) einen stumpfen Keil oder eine Fase (24) an ihrem Ende (25) bilden, welches zwei konkav geformte, geneigte Ebenen (26) vereint, deren Scheitelabschnitte (27) im Wesentlichen parallel sind, um das Einführen zwischen die Kanten (21) der Wandungselemente (19) des Rohrprofils (2) zu erleichtern, und an die sich konkave geneigte Abschnitte (26) anschließen, um das Einführen des einstückigen Körpers (3) in die Kammer (10) des Rohrprofils (2) zu führen und eine elastische Energie zu akkumulieren, die ausreicht, um den einstückigen Körper (3) in und auf dem Rohrprofil (2) zu halten, nachdem die Kanten (21) der Wandungselemente (19) die Endabschnitte (28) der geneigten Ebenen (26) überwunden haben, welche an die beiden Referenzanlageebenen (22) angrenzen.

2. Hilfsvorrichtung (1) zum Verwenden, Anbringen und Ausrichten von Rohrprofilen (2) nach dem vorgehenden Anspruch, **dadurch gekennzeichnet, dass** die einstückige Anordnung (3) mit einem Hohl- oder Vollkörper (4) aus einem Kunst- oder Kompositstoff mit elastischem Vermögen und Formgedächtnis hergestellt ist, der neben der Bewahrung der anfänglichen Referenzkalibrierung der Wasserwaagen- und/oder Messmittel (7) auf die Struktur der einstückigen Anordnung (3) die Leistung und Funktion der Mittel (5), (6), (8), (9) der einstückigen Anordnung (3) erlaubt.

3. Hilfsvorrichtung (1) zum Verwenden, Anbringen und Ausrichten von Rohrprofilen (2) nach Anspruch 1, **dadurch gekennzeichnet, dass**
die Griffmittel (5a, 5b) der einstückigen Anordnung (3) aus entweder einem Griffblatt (11) bestehen, das mit den Mitteln (6) zum Halten einer oder mehrerer Wasserwaagen- und/oder Messvorrichtungen (7) der einstückigen Anordnung (3) integral ist, wobei das Blatt (11) erhabene und vertiefte Strukturen (12) zum sicheren Ergreifen mit zwei Fingern beim Installieren der Hilfsvorrichtung (1) aufweist, oder alternativ aus einer Ausnehmung (12) zwischen den Mitteln (6) zum Halten einer oder mehrerer Wasserwaagen- und/oder Messvorrichtungen (7) und den Wandungselementen (13) der Hilfsvorrichtung (1) bestehen und so das sichere Ergreifen durch Fingerdruck auf mindestens eine Wasserwaagen- und/oder Messvorrichtung (7) und durch Fingerspitzen, die von den Rändern (14) der Ausnehmung (12) geführt und positioniert werden, ermöglichen.

4. Hilfsvorrichtung (1) zum Verwenden, Anbringen und Ausrichten von Rohrprofilen (2) nach Anspruch 1, **dadurch gekennzeichnet, dass** die Mittel (6) zum Halten einer oder mehrerer Wasserwaagen- und/oder Messvorrichtungen (7) der einstückigen Anordnung (3) ganz oder teilweise als Mantel (15) ausgebildet sind, der mit allen
oder einem Teil der Strukturen der Wasserwaagen- und/oder Messvorrichtung(en) (7) integral ist.

5. Hilfsvorrichtung (1) zum Verwenden, Anbringen und Ausrichten von Rohrprofilen (2) nach Anspruch 1 und 4, wobei die Mittel (6) zum Halten einer oder mehrerer Wasserwaagen- und/oder Messvorrichtungen (7) der einstückigen Anordnung (3) bzw. der mit den Strukturen der Wasserwaagen- und/oder Messvorrichtung(en) (7) integrale Mantel (15) Ausnehmungen (16) aufweisen, welche Lesefenster (17) mit multidirektionalen Betrachtungswinkeln im Bereich der Ablesemarken der Wasserwaagen- und/oder Messvorrichtungen (7) darstellen.

6. Hilfsvorrichtung (1) zum Verwenden, Anbringen und Ausrichten von Rohrprofilen (2) nach Anspruch 1 und 4, wobei bei den Mitteln (6) zum Halten einer oder mehrerer Wasserwaagen- und/oder Messvorrichtungen (7) der einstückigen Anordnung (3) bzw. dem mit den Strukturen der Wasserwaagen- und/oder Messvorrichtung(en) (7) integralen Mantel (15) der Mantel (15) mit Flügeln (18) und Wänden (13) der elastischen Mittel (9) zum Einführen der Hilfsvorrichtung (1) zum Anbringen und Ausrichten von Rohrprofilen (2) in die Kammer (10) des Rohrprofils (2) integral ist.

7. Hilfsvorrichtung (1) zum Verwenden, Anbringen und Ausrichten von Rohrprofilen (2) nach Anspruch 1, **dadurch gekennzeichnet, dass**
die elastischen Mittel (8a, 8b, 8c) zum Referenzieren (8a), Zentrieren (8b) und Halten (8c) der Hilfsvorrichtung (1) zum Anbringen und Ausrichten von Rohrprofilen (2) auf und in dem Profil (2) in Zweierkombination, symmetrisch gegenüberliegend, auf der Außenwand (13) der einstückigen Anordnung (3) gepaart sind und aufweisen:
- integral mit jeder der Seiten (17) des Mantels (15) der Wasserwaagen- und/oder Messvorrichtungen (7), zwei Flügel (8c, 18) zum Halten des einstückigen Körpers (3) in und auf dem Profil (2), welche zu den Wandungselementen (19) des Rohrprofils (2) entgegengesetzt orientiert und in deren Richtung und zu diesen hin geneigt sind; wobei die Wandungselemente (19) von den Flügeln (18) überdeckt sind, wenn sich die Hilfsvorrichtung (1) auf und in dem Profil (2) in Position befindet;
- benachbart zu der Basis jedes der Halteflügel (8c, 18), welche auf dem Mantel (15) der Wasserwaagen- und/oder Messvorrichtungen (7) ausgebildet sind, eine Zentrierebene (8b, 20) mit kontinuierlich konkaver Krümmung oder einer Krümmung durch aufeinanderfolgende, parallele Ebenen der Zentrierebene (20), die so die Autopositionierung und -justierung der Kante (21) der Wandungselemente (19) auf den Referenzanlageebenen (22) infolge der elastischen Spannung ermöglicht, die von dem Material des einstückigen Körpers (3) ausgehend von den elastischen Mitteln (8), darunter dem Zentriermittel (8b), der Wasserwaagen- und/oder Messvorrichtung (7) frei wird,
- integral anschließend an die Zentrierebenen (8b, 20) und die elastischen Mittel (9) zum Einführen der Hilfsvorrichtung (1) in die Kammer (10) des Rohrprofils (2), zwei Referenzanlageebenen (8a, 22) für die planaren Innenenden (23) der Wandungselemente (19) der Rohrprofile (2) und Bewegungsendanschläge zum Positionieren der Vorrichtung (1) auf und in dem Profil (2),
so dass die Referenzierung des Rohrprofils (2) auf sichere und ausreichende Weise der Referenzkalibrierung der Wasserwaagen- und/oder Messvorrichtungen (7) auf die Struktur der einstückigen Anordnung (3) entspricht.

8. Verfahren zur Herstellung einer Vorrichtung nach einem der vorhergebenden Ansprüche durch Zusammenbau der folgenden Untereinheiten:
- Griffmittel (5a, 5b) der Hilfsvorrichtung (1) zum Anbringen und Ausrichten von Rohrprofilen (2),
- Mittel (6) zum Halten einer oder mehrerer Wasserwaagen- und/oder Messvorrichtungen (7),
- elastische Mittel (8) zum Referenzieren (8a), Zentrieren (8b) und Halten (8c) der Hilfsvorrichtung (1) zum Anbringen und Ausrichten von Rohrprofilen (2) in und auf dem Profil (2), welche in Zweierkombination, symmetrisch gegenüberliegend, auf der Außenwand (13) der einstückigen Anordnung (3) gepaart sind und aufweisen:
- integral mit jeder der Seiten (17) des Mantels (15) der Wasserwaagen- und/oder Messvorrichtungen (7), zwei Flügel (8c, 18) zum Halten des einstückigen Körpers (3) in und auf dem Profil (2), welche zu den Wandungselementen (19) des Rohrprofils (2) entgegengesetzt orientiert und in deren Richtung und zu diesen hin geneigt sind;
- und elastische Mittel (9) zum Einführen der Hilfsvorrichtung (1) zum Anbringen und Ausrichten von Rohrprofilen (2) zwischen die Kanten (21) der Wandungselemente (19) und in die Kammer (10) des Rohrprofils (2),
- wobei die elastischen Mittel (9) zum Einführen der Hilfsvorrichtung (1) in die Kammer (10) des Rohrprofils (2) einen stumpfen Keil oder eine Fase (24) an ihrem Ende (25) bilden, welches zwei konkav geformte, geneigte Ebenen (26) vereint, deren Scheitelabschnitte (27) im Wesentlichen parallel sind, um das Einführen zwischen die Kanten (21) der Wandungselemente (19) des Rohrprofils (2) zu erleichtern, und an die sich konkave, geneigte Abschnitte (26) anschließen, um das Einführen des einstückigen Körpers (3) in die Kammer (10) des Rohrprofils (2) zu führen und eine elastische Energie zu akkumulieren, die ausreicht, um den einstückigen Körper (3) in und auf dem Rohrprofil (2) zu halten, nachdem die Kanten (21) der Wandungselemente (19) die Endabschnitte (28) der geneigten Ebenen (26) überwunden haben, welche an die beiden Referenzanlageebenen (22) angrenzen.

9. Verfahren zur Hilfestellung beim Anbringen und Ausrichten von Rohrprofilen (2), welche mit Wandungselementen versehen sind, durch Verwenden mindestens einer Hilfsvorrichtung (1) zum Verwenden, Anbringen und Ausrichten von Rohrprofilen (2) nach einem der Ansprüche 1 bis 7, mit dem Ziel,
die Unannehmlichkeit eines eigenen Arbeitsgeräts und gar die Notwendigkeit einer Unterstützung bei der Verwendung, Anbringung und Ausrichtung von Profilen (2) zu beseitigen, welche einen Rahmen, eine Führung oder Schiene zahlreicher Anwendungen im Bauwesen bilden, wobei die Vorrichtung (1) mit den Rohrprofilen (2) eine autonome und lösbare einstückige Anordnung (3) mit einem Hohl- oder Vollkörper (4) aus einem im Wesentlichen elastischen Kompositstoff mit Formgedächtnis bildet, wobei
- das Ergreifen anhand von Mitteln (5a, 11, 5b, 12) erfolgt,
- das Referenzieren,
- das Zentrieren und
- das Halten
unter Verwendung von Mitteln (6) zum Halten einer oder mehrerer Wasserwaagen- und/oder Messvorrichtungen (7), elastischen Mitteln (8) zum Referenzieren (8a, 22), Zentrieren (8b, 20) und Halten (8c, 18) und elastischen Mitteln (9) zum Einführen der Hilfsvorrichtung (1) zum Anbringen und Ausrichten von Rohrprofilen (2) in die Kammer (10) eines Rohrprofils (2) erfolgt, was die Dauerhaftigkeit und die Bewahrung der anfänglichen Referenzkalibrierung der Wasserwaagen- und/oder Messmittel (7) auf die Struktur der einstückigen Anordnung (3) gewährleistet.

## Claims

1. Device (1) for aiding the placement, laying and adjustment of the orientation of tubular section (2) with turned-in sides, said device (1) for aiding the placement, laying, fixing and adjustment of the orientation of sections (2) being a portable, self-contained and movable one-piece assembly (3), with a hollow or solid elastic body (4), comprising in combination:
- means of gripping (5a, 5b) the device (1) for aiding the laying and adjustment of the orientation of tubular sections (2),
- means of holding (6) one or a plurality of spirit level and/or measuring devices (7),
**characterised in that** said device (1) comprises:
- elastic means (8) of referencing (8a), centering (8b) and holding (8c) the device for aiding (1) the laying and adjustment of the orientation of tubular sections (2) in and on the section (2),
- and elastic means of introducing (9) the device for aiding (1) the laying and adjustment of the orientation of tubular sections (2) between the edges (21) of the turned-in sides (19) and into the chamber (10) of the tubular section (2); the elastic means of introducing (9) the aid device (1) into the chamber (10) of the tubular section (2) forming a wedge or truncated wedge (24) at its end (25) which combines two concave slopes (26) whose apical parts (27) are substantially parallel to facilitate introduction between the two edges (21) of the turned in-sides (19) of the tubular section (2), followed by concave sloping parts (26) to guide the introduction of the one-piece body (3) into the chamber (10) of the tubular section (2) and accumulate enough elastic energy to hold the one-piece body (3) in and on the tubular section (2) after the edges (21) of the turned-in sides (19) have gone past the end parts (28) of the sloping surfaces (26) adjoining the reference bearing surface (22).

2. According to the previous claim, a device (1) for aiding the placement, laying and adjustment of the orientation of tubular sections (2), **characterised in that** the one-piece assembly (3) with either a hollow (4) or a solid body is made of an elastic, shape-memory synthetic or composite material allowing, as well the maintaining of the initial reference calibration of the spirit level and/or measuring means (7) with the structure of said one-piece assembly (3), the aforementioned performance and operation of the aforementioned means (5), (6), (8), (9) of the one-piece assembly (3).

3. According to claim 1, a device (1) for aiding the placement, laying and adjustment of the orientation of tubular sections (2), **characterised in that** the means of gripping (5a, 5b) the one-piece assembly (3) comprise a grip (11) integral with the means of holding (6) one or a plurality of spirit level and/or measuring devices (7) in the one-piece assembly (3), which grip (11) comprises a surface (12) with raised and depressed parts to ensure safe, secure gripping with two fingers when placing the aid device (1), or alternatively a cut-away (12) situated between the means of holding (6) one or a plurality of spirit level and/or measuring devices (7) and the side walls (13) of the aid device (1), thereby enabling safe, secure gripping by pinching with the fingers at least one spirit level and/or measuring device (7) with the tips of the fingers guided and positioned by the edges (14) of the cut-away (12).

4. According to claim 1, a device (1) for aiding the laying, placing and adjustment of the orientation of tubular sections (2), **characterised in that** the means of holding (6) one or a plurality of spirit level and/or measuring devices (7) in the one-piece assembly (3) are shaped totally or partially in the form of an envelope (15) integral with all or part of the conformations of the spirit level and/or measuring device or devices (7).

5. According to claims 1 and 4, a device (1) for aiding the placing, laying and adjustment of the orientation of tubular sections (2), wherein the means of holding (6) one or a plurality of spirit level and/or measuring devices (7) in the one-piece assembly (3) or envelope (15) integral with the conformations of the spirit level and/or measuring device or devices (7) have cut-aways (16) constituting display windows (17) with multi-directional viewing angles, arranged in front of the indicators of the spirit level and/or measuring devices (7).

6. According to claims 1 and 4, a device (1) for aiding the placing, laying and adjustment of the orientation of tubular sections (2), wherein the means of holding (6) one or a plurality of spirit level and/or measuring devices (7) in the one-piece assembly (3) or envelope (15) integral with the conformations of the spirit level and/or measuring device or devices (7) comprise said envelope (15) integral with the wings (18) and walls (13) of the elastic means of introducing (9) the device for aiding (1) the laying and adjustment of the orientation of tubular sections (2) into the chamber (10) of the tubular section (2).

7. According to claim 1, a device (1) for aiding the placement, laying and adjustment of the orientation of tubular sections (2), **characterised in that** the elastic means (8a, 8b, 8c) of referencing (8a), centering (8b) and holding (8c) the device for aiding (1) the laying and adjustment of the orientation de tubular sections (2) on and in the section (2) are associated in symmetrically opposed two-by-two combination with the outer wall (13) of the one-piece assembly (3) and comprise:
integral with each of the sides (17) of the envelope (15) of spirit level and/or measuring devices (7), two wings for holding (8c, 18) the one-piece body (3) in and on the section (2), facing in opposite directions and sloping in the direction of and towards the turned-in sides (19) of the tubular section (2); turned-in sides (19) that said wings (18) cover when the aid device (1) is in place on and in the section (2),
- adjacent to the base of each of said holding wings (8c, 18), arranged on the envelope (15) of the spirit level and/or measuring devices (7), a centering surface (8b, 20) with a continuous concave curve or a curve in the form of a succession of parallel surfaces in the centering surface (20), thereby enabling the self-positioning and adjustment of the edge (21) of the turned-in sides (19) on the reference bearing surfaces (22) due to the elastic strain released by the material of the one-piece body (3), therefore of the elastic means (8) including the means of centering (8b) the spirit level and/or measuring device (7),
- continuously integral with the centering surfaces (8b, 20) and the elastic means of introducing (9) the aid device (1) into the chamber (10) of the tubular section (2), two reference bearing surfaces (8a, 22) for the flat internal ends (23) of the turned-in sides (19) of the tubular sections (2) and end stops for the positioning of said device (1) on and in the section (2),
so that the referencing of the tubular section (2) corresponds surely, certainly and sufficiently to the reference calibration of the spirit level and/or measuring means (7) with the structure of said one-piece assembly (3).

8. A process for manufacturing a device according to one of the previous claims by assembling the following subassemblies:
- means of gripping (5a, 5b) the device for aiding (1) the laying and adjustment of the orientation of tubular sections (2),
- means of holding (6) one or a plurality of spirit level and/or measuring devices (7),
- elastic means (8) of referencing (8a), centering (8b) and holding (8c) the device for aiding (1) the laying and adjustment of the orientation of tubular sections (2) in and on the section (2), which are associated in symmetrically opposed two-by-two combination with the outer wall (13) of the one-piece assembly (3) and comprise:
- integral with each of the sides (17) of the envelope (15) of the spirit level and/or measuring devices (7), two wings for holding (8c, 18) the one-piece body (3) in and on the section (2), facing in opposite directions and sloping in the direction of and towards the turned-in sides (19) of the tubular section (2);
- and elastic means of introducing (9) the device for aiding (1) the laying and adjustment of the orientation of tubular sections (2) between the edges (21) of the turned-in sides (19) and into the chamber (10) of the tubular section (2),
- the elastic means of introducing (9) the aid device (1) into the chamber (10) of the tubular section (2) forming a wedge or truncated edge (24) at its end (25) which combines two concave slopes (26) whose apical parts (27) are substantially parallel to facilitate introduction between the two edges (21) of the turned in-sides (19) of the tubular section (2), followed by concave sloping parts (26) to guide the introduction of the one-piece body (3) into the chamber (10) of the tubular section (2) and accumulate enough elastic energy to hold the one-piece body (3) in and on the tubular section (2) after the edges (21) of the turned-in sides (19) have gone past the end parts (28) of the sloping surfaces (26) adjoining the reference bearing surface (22).

9. Method of implementation of aid with laying and adjusting the orientation of tubular sections (2) with turned-in sides by using at least one device (1) for aiding the laying, placing and adjustment of the orientation of tubular sections (2) according to one of the claims 1 to 7 in order to
spare oneself the discomfort of using a separate tool and even the need for assistance when placing, laying and adjusting sections (2) forming a frame or guide or track in multiple applications in the construction field, said device (1) for tubular sections (2) forming a self-contained and movable one-piece assembly (3), the body of which may be hollow (4) or solid and which is made of substantially elastic and shape-memory composite material,
- gripping being achieved by means (5a, 11, 5b, 12),
- referencing,
- centering and
- holding
being achieved by the use of means for holding (6) one or a plurality of spirit level and/or measuring devices (7), elastic means (8) of referencing (8a, 22), centering (8b, 20) and holding (8c, 18) and elastic means of introducing (9) the device for aiding (1) the laying and adjustment of the orientation of tubular sections (2) into the chamber (10) of a tubular section (2), all of which guarantees the continuity and maintaining of the initial reference calibration of the spirit level and/or measuring means (7) with the structure of said one-piece assembly (3).
